(19) Europäisches Patentamt

European Patent Office

Office européen des brevets

(11) EP 4 538 990 A1

(12) **EUROPEAN PATENT APPLICATION**

(43) Date of publication:
16.04.2025 Bulletin 2025/16

(21) Application number: 23315383.2

(22) Date of filing: 10.10.2023

(51) International Patent Classification (IPC):
*G06V 10/764* (2022.01)

(52) Cooperative Patent Classification (CPC):
**G06V 10/764**; G06V 2201/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Caranx Medical
75013 Paris (FR)**

(72) Inventors:
• WEI, Wen
06410 Biot (FR)
• BERTHET-RAYNE, Pierre
06800 Cagnes-sur-Mer (FR)
• MIRA, Anna
06000 Nice (FR)

(74) Representative: **Hepp Wenger Ryffel AG
Friedtalweg 5
9500 Wil (CH)**

(54) **A COMPUTER-IMPLEMENTED METHOD, A COMPUTER PROGRAM PRODUCT, A DATA PROCESSING UNIT, A COMPUTER-READABLE STORAGE MEDIUM, A USE OF THE COMPUTER-IMPLEMENTED METHOD, AND A COMPUTER-IMPLEMENTED METHOD OF TRAINING A MACHINE-LEARNING MODEL**

(57) The invention relates to a computer-implemented method for real-time classification of a medical image (3) to analyse whether each of the plurality of medical images (3) was captured while a body duct (10), in particular the aortic root (11), was under the influence of a contrast agent (14), the method comprising the steps: successively receiving a plurality of medical images (3) in real-time, using an input interface, processing the plurality of medical images (3) using a processing unit (4) operatively connected to the input interface, thereby determining a probability that the medical image (3) was captured while under the influence of the contrast agent (14) based on the medical image (3) and a classification model stored on a memory unit, using the processing unit (4) for generating a classification of the medical image (3) whether the medical image was captured under the influence of the contrast agent (14) based on the probability, transmitting the classification to an output interface in real-time.

Fig. 3A

EP 4 538 990 A1

**Description**

The invention relates to a computer-implemented method, a data processing unit, a computer-readable storage medium, and a computer-implemented method of training a machine-learning model for real-time classification according to the independent claims.

Medical imaging such as Magnetic Resonance Imaging (MRI), Computer Tomography (CT), or fluoroscopy, in particular angiography, in modern healthcare facilities enables accurate diagnosis and monitoring of anatomical features and medical instruments, in particular when carrying out surgical methods such as a transcatheter aortic valve implantation / replacement (TAVI / TAVR). The medical instrument may be a surgical instrument.

Administering a contrast agent, e.g. into the vascular structure of the patient, enhances visibility and delineation of anatomical structures or vasculatures by increasing the contrast between a targeted tissue in contrast to its surroundings, in particular blood, in medical images. However, structures having a hight absorption such as medical / medical instruments or specific anatomical features such as calcifications may not be visible in medical images which were acquired under the influence of contrast agent.

Due to clinical contraindications, such as hypersensitivity, side effects, allergic reactions, contrast-induced nephropathy, extravasation injury, or reactions to using high-osmolality contrast media, the administration of contrast agents should be minimized.

The discrimination between medical images which merely provide a momentary "snapshot" in real-time acquired under the influence of contrast agent and without contrast agent is often carried out by clinicians relying on their expertise which is subject to inter-observer variability. This manual discrimination is hence potentially error-prone, in particular due to disregarding subtle differences in the image, based on a subjective judgment of a clinician, labour-intensive, as well as time-consuming. Furthermore, real-time imaging often requires repeated administration of contrast agent to make certain anatomical structures and/or medical instruments visible again at later stage. Especially when the anatomical structure and/or medical instruments are subject to physiological motion, e.g. the cardiac or the respiratory cycle, or when manual/motor-drive medical instrument actuation occurs, re-administration of contrast agent may be required.

EP 3 719 744 A1 provides a computer-implemented method for autonomous segmentation of contrast-filled coronary artery vessels by means of a trained convolutional neural network (CNN) to output a mask denoting the coronary vessels.

However, the prior art lacks a reliable computer-implemented method, computer program product, a data processing unit, or a computer-readable medium for automated classification, in particular real-time classification, of a plurality of medical images to determine whether the medical images were acquired under the influence of a contrast agent.

Moreover, there is a need in the prior art to computationally integrate such a classification and the corresponding data (e.g. position/orientation of anatomical structures, landmarks, surgical, or medical instruments) into a medical workflow/system, in particular for reusing the data at a later stage.

In addition, there is a need for integration of the data e.g. to provide historical data, research data, and, most importantly, interoperability for computer-implemented medical systems via the data.

The invention shall further provide a cost-effective treatment of patients by reducing the required administration(s) of contrast agent. The present invention shall provide a robust classification of medical images, minimizing human error while optimizing diagnostic precision and enhancing a workflow efficiency.

It is therefore the object of the present invention to overcome these and other disadvantages of the prior art and to provide a computer-implemented method, a computer program product, a data processing unit, a computer-readable storage medium, a use of the computer-implemented method, and a computer-implemented method of training a machine-learning model. The invention is used for classification, in particular real-time classification, of a medical image to predict whether the medical image was captured under the influence of a contrast agent. These objects are solved according to the independent claims and further embodiments result from the dependent claims.

According to a first aspect of the invention, a computer-implemented method for classification, in particular real-time classification, of a medical image to predict whether the medical image was captured while a body duct, preferably a cardiac component or a vessel component, in particular the aortic root, the aortic, mitral, and/or tricuspid valve, was under the influence of a contrast agent is provided.

The method comprises successively receiving at least one or a plurality of medical images, in particular in real-time for several medical images, using an input interface. The at least one medical image is processed using a processing unit operatively connected to the input interface. The processing unit is used to determine a probability that the medical image was captured while under the influence of the contrast agent based on the medical image and a classification model stored on a memory unit. The processing unit is further used for generating a classification of the medical image whether the medical image was captured under the influence of the contrast agent based on the probability. The method includes transmitting the classification to an output interface, preferably in real-time.

Those images which are classified as being captured under the influence of the contrast agent are hereinafter referred to as "contrast images". Those images which are classified as being captured non under the influence of the contrast agent are hereinafter referred to as "non-contrast images".

The term "acquired under the influence of the contrast agent" refers to exceeding a specific threshold of contrast agent concentration in the body duct. The classification may include exactly two classes or more than two resulting classes, in particular a plurality of classes which all exceed a specific threshold of contrast agent concentration to different degrees.

The classification enables reliable computational localizing / modelling of an anatomical feature or of a medical and/or a medical instrument. The visibility may depend on whether the medical image or subsection / region of interest within the medical image was/were acquired under the influence of a contrast agent.

In particular, it is used for binary classification. Alternatively, the classification may be indicative of a plurality of probability intervals or the probability itself.

The plurality of medical images may be two-dimensional or three-dimensional medical images, in particular fluoroscopic images.

The computer-implemented method can be used intraoperatively during fluoroscopy, in particular while fluoroscopic images, preferably angiograms, are acquired in real-time for carrying out surgical methods. The automated classification may allow clinicians or a robotic control to make rapid, immediate, and informed decisions and monitor a surgical intervention more effectively. Fluoroscopic images show the soft tissue characteristics, fluid dynamics of the contrast filled in the body duct, e.g. the aorta, in particular the aortic root, and/or dynamic processes / features to be detected and/or visualized.in real-time.

Determining the probability of a newly received medical image may be based on the probability of at least one previously received medical image.

This allows to take the probability / probabilities of at least one temporally prior processed medical image into consideration for determining the probability of a newly received medical image. This may enhance the accuracy and depth in classification of a newly received medical image.

The method may comprise applying a first algorithm, in particular a machine learning algorithm, to take into account the time between the acquisition of the newly received medical image and the previously received medical images to determine the probability of the newly received medical image.

This allows to not only consider a plurality of subsequent medical images, but also include a metric indicative of the time between the acquisition of the successive medical images. This may increase the accuracy of the probability and the classification. If the successive medial images are not detected at an equidistant time interval, e.g. to adjust a radiation dosage during fluoroscopy of a medical procedure changing the frames per second, the method may comprise receiving the individual time points of the medical images instead of the time.

The first algorithm may be configured to take into account the determined probabilities of a plurality of successive medical images with the time between an acquisition of the successive medical images to determine a threshold-based classification value. The method may comprise generating the classification of the medical image based on whether the threshold based classification value exceeds a predefined threshold.

As an alternative to the predefined threshold, a dynamic threshold may be used which may vary depending on the successive medical images, in particular on a contrast, intensity, or quality of the successive medical images or a duration of the time between the acquisition. The dynamic threshold may allow to take the dynamics into consideration, such as considering the temporal change of the probability, when generating the classification of the medical images based on the threshold-based classification value.

The method may comprise applying a second algorithm, in particular a machine learning algorithm, to the non-contrast and/or contrast images, and in particular a time between the acquisition and generate a predicted probability of whether a future image is a contrast or non-contrast image. The method may comprise generating the classification of at least one future medical image based on the predicted probability.

This may allow to increase the accuracy of the classification of future medical images since the effect of the contrast agent often gradually increases and gradually fades over time. This enhances a reliability of the predicted probability and may prevent potential false positives / false negatives since the visibility of contrast agent in the medical images is temporally highly correlated and normally remains visible / non-visible in a continuous time interval.

In addition, the method may comprise determining a predicted time interval indicative of until when the contrast agent will be visible based on the predicted probability, in particular based on a plurality of predicted probabilities. The method may comprise generating an algorithm, in particular a function, to predict a plurality of future probabilities with respect to the respective plurality of future time points. The algorithm may be a machine learning algorithm trained on imaging data and/or historic data. Alternatively, the algorithm may be a deterministic algorithm which is fit as a function of time between medical image acquisition using the respective plurality of prior predicted probabilities or prior medical images.

The method may include transmitting the predicted time interval to a display or a robotic controller, e.g. to indicate how long

- the contrast agent will remain visible to a clinician or operate the robotic controller accordingly.

The generated classification of the future medical images may be transmitted to the output interface in real-time.

The method may comprise determining a spatial orientation and/or a position of the body duct, in particular the cardiac component, preferably the aortic root, in the medical images based on the contrast images, in particular only on the contrast images. Additionally or alternatively, the method may comprise reconstructing a two- or three-dimensional representation of the body duct based only on the contrast images, and in particular based on a three-dimensional model of the aortic root, preferably a pre-operative three-dimensional computer tomography model. The method may comprise visually displaying the non-contrast images including the two-dimensional representation of the body duct in real-time.

This may e.g. allow for using only the contrast images for determining the spatial orientation and/or the position of the aortic root and in particular the aortic annulus, the left ventricle, the aortic valve, a calcification, aortic wall, the coronary arteries, and/or the sinuses of Valsalva. These anatomical features are largely indiscernible in medical fluoroscopy imaging without utilization of the contrast agent. Only taking these medical images thus increases the precision in reconstructing / visualizing anatomical regions of interest. The reconstructed two- or three-dimensional representation can further reduce the exposure of patient and/or clinicians to radiation and/or further contrast agent injections. The two- or three-dimensional model may further be used for further procedural planning such as positioning of an implant, in particular a heart valve prosthesis within the aortic annulus.

This may further allow for real-time guidance during surgical or interventional procedures by displaying the contrast images and the two-dimensional representation, e.g. for navigating through the aortic root, in particular when the contrast agent effect fades over time.

The method may comprise determining a spatial orientation and/or position of a medical instrument, in particular a two-or three-dimensional representation of the medical instrument, in the medical images based on non-contrast images. Determining the orientation and/or position may be based on a known predefined shape of the medical instrument. The method may comprise visually displaying the two-dimensional representation of the medical instrument in the contrast images in real-time.

The term medical instrument in the context of this application may include e.g. medical instruments, a guidewire, a catheter, and an implant. The method may further comprise determining a relative spatial orientation and/or position of the components of the medical instrument with respect to each other.

This allows to reliably determine the spatial orientation and/or position of the medical instrument, which is normally also rather radiopaque, not under the influence of the contrast agent in a reliable and precise manner in real-time.

Visually displaying the two-dimensional representation of the medical instrument in the contrast images may allow for a reliable detection of the position / orientation of the medical instrument with respect to the aortic root or components thereof. Otherwise, the administration of the contrast agent, while enhancing the visibility of the aortic root, can obfuscate the position / orientation of the medical instrument because it is imperceptible in the medical images under the influence of the contrast agent. In alternative to the orientation and/or the position of the medical instrument, the orientation and/or the position of certain anatomical features such as a calcification in the medical images may be determined based on the non-contrast images.

The method may comprise merging the reconstructed two- or three-dimensional representation of the aortic root or components thereof with the two- or three-dimensional representation of the medical instrument. The merged two- or three-dimensional representation shows a spatial relationship between the aortic root or components thereof and the medical instrument or components thereof.

The method may comprise visualizing the merged reconstructed two- or three-dimensional representation of the aortic root and the medical instrument, e.g. on a display.

This facilitates concurrent optimized reconstruction / visualization of the aortic root, in particular at least a component of the aortic root, and the medical instrument, which enables a more precise and expeditious clinical intervention.

The method may comprise measuring a concentration of the contrast agent within the body duct, in particular the aortic root using an intracorporeally arranged sensor, in particular attached to a medical instrument. The method may comprise using the processing unit for generating the classification of the plurality of medical images further taking into account the measured concentration of the contrast agent.

The concentration may be measured via the sensor based on measuring the volume of contrast agent which is injected or measured by detecting a chemical concentration of the contrast agent in the blood.

Alternatively, an extracorporeal sensor may be adapted for measuring the concentration of contrast agent, e.g. via the contrast in the imaging data, in particular via averaging the contrast in a subsection of the imaging data corresponding to the body duct or a region of interest in the body duct.

This allows to determine the concentration of contrast agent, e.g. at a target site, in a more precise / reliable manner which may make the classification of the medical images more robust. In addition, the method may comprise determining a gradient of the concentration between subsequent medical images which may support the classification accuracy further.

The method may comprise pre-processing the medical images using the processing unit by defining at least one region of interest corresponding to a subregion of the medical images. The at least one region of interest is arranged around a section of the medical images corresponding to a medical instrument and/or corresponding to an anatomical section, in particular the aorta, preferably the aortic root. In addition or alternatively, a plurality of regions of interest may be arranged spaced apart from each other, in particular in a chess-board pattern. The processing unit may be used to determine the probability of each medical image based on the at least one region of interest of the medical image or by taking into account a plurality of regions of interest of the medical image.

The probability may be exclusively determined based on the region of interest or the plurality of regions of interest.

Administration of contrast agent is typically mainly visible in the corresponding body ducts / vasculature of the patient. Therefore, at least one region of interest which is associated with the anatomy of the patient may enhance the classification Using at least one region of interest or even different regions of interests during different stages of the medical intervention may further allow for a more intricate visualization / reconstruction at the region / regions of interest, e.g. corresponding to a location of the aortic root or components thereof. The region of interest may be associated with the body duct, preferably the aorta or even a target region of the aortic root.

The region of interest may be moved in a synchronized manner corresponding to a trajectory of a medical instrument within the body duct. This may allow for providing more details and precision at the current position / orientation of the medical instrument, in particular of a distal tip of the medical instrument, within the body duct, e.g. during progressive advancement of the medical instrument from the femoral artery across the aortic arch into the aortic annulus.

Using the plurality of regions of interest of the medical image or different medical images may further yield better classification results by enhancing the precision of determining the temporal contrast agent spatial spread/dispersion within the body duct. The method may further comprise determining the probability and classification of individual regions of interest of the medical image separately. This may enhance the determination of the position / the orientation or two-or three-dimensional representation of the anatomical feature / medical instrument corresponding the individual regions of interest.

The method may comprise the steps of receiving at least one first medical image which includes a first anatomical feature or a medical instrument and receiving a second medical image which includes a different second anatomical feature or medical instrument. The first and second medical images may be acquired simultaneously or sequentially. The method may comprise processing the first and second medical image using the processing unit, thereby determining the probabilities that the first and the second medical image was acquired under the influence of the contrast agent, respectively, based on the second and first medical image and the classification model. The method may comprise using the processing unit for generating a first and second classification of the first and second medial image whether the medical images were captured under the influence of the contrast agent based on the probabilities. The method may comprise transmitting the first and second classification to the output interface, preferably in real-time.

The medical instruments may relate to medical, in particular surgical instruments, which were introduced into the body duct, in particular into a cardiac component.

This may enable to classify that the first and a second anatomical feature/medical instrument which are of interest are sufficiently visible the first and second images without the processing unit having to preprocess the first and second medical images to generate regions of interest for the first and second anatomical features/medical instruments.

Alternatively, the method may comprise preprocessing the first and second medical images using the processing unit by defining at least a first region of interest of the first image which includes a first anatomical feature/medical instrument and a second region of interest of the second image which includes a second anatomical feature/medical instrument. Alternatively, similarly as described above, only one medical image may be preprocessed to define the first and second region of interest including the first/second anatomical feature/medical instrument, respectively.

The method steps for these first and second regions of interest may be executed in a manner consistent with the method detailed for the first and second images described above.

During medical procedures different anatomical features/medical instruments are preferably visible simultaneously or visible sequentially to mitigate potential surgical complications. For example, a first anatomical feature such as an aortic annulus and a second anatomical feature such as a left ventricular outflow tract should preferably be visible simultaneously for performing TAVI/TAVR. This may ensure that both are visible, in particular simultaneously, based on the first and the second classification.

Another aspect of the invention relates to a computer-implemented method, in particular a previously described computer-implemented method. The method comprises successively receiving a plurality of medical images in real-time using an input interface. A processing unit connected to the input interface is used for analysing an initial image set comprising at least one of the medical images taken at an initial time point, thereby generating an initial result. The method comprises predicting a subsequent result for at least one subsequent image set taken at a subsequent time point based on the initial result, thereby generating a predicted subsequent result. The method comprises analysing a subsequent image set comprising at least one medical image received at the subsequent time point, thereby generating an analysed subsequent result. The method comprises generating a refined subsequent result based on the predicted subsequent result and the analysed subsequent result.

The results may comprise or consist of an orientation and/or a position of an anatomical feature, such as the aortic root, a medical instrument, or components thereof. Alternatively, the results may comprise or consist of a distance or relative orientation between the anatomical feature, the medical instrument, or components thereof. The medical instrument can consist of or comprise a heart valve prosthesis, a guidewire, or a catheter. The anatomical feature may e.g. comprise or consist of the aortic annulus, the aortic arc, a leaflet, or a calcification. It is also possible to consider a plurality of distances or relative orientations between the components of the medical instrument, of the anatomical feature, or the medical instrument and the anatomical feature.

This method allows to determine a more refined subsequent result by merging the predicted subsequent result and the analysed subsequent result.

When combining the predicted subsequent result and the analysed subsequent result, a weighting algorithm, in particular a machine learning weighting algorithm, can be used. The weighting algorithm is configured to weight the respective impact of the predicted subsequent result and the analysed subsequent result on the refined subsequent result.

The method may comprise adjusting the algorithm's weighting according to an initial image set's quality, reflecting the accuracy / certainty of the predicted subsequent result, and/or a subsequent image's quality / visibility of features, reflecting the accuracy / certainty of the analysed subsequent result. The analysed subsequent result may for example indicate no accurate position / orientation of an anatomical feature / medical instrument, e.g. if the subsequent image is a contrast / non-contrast image.

A classification of a medical image as previously described (i.e. whether the medical images were acquired while a body duct was under the influence of a contrast agent) may be further used. The method may comprise adjusting the weighting based on the classification of the medical image(s) of the initial image set and/or the subsequent image set. In particular, when the classification of the medical image(s) of the initial image set and the subsequent image set are not the same, the weighting of the predicted subsequent result and the analysed subsequent result may be adjusted. The weighting of the predicted subsequent result and the analysed subsequent result may be adjusted based on the respective level of confidence. The respective level of confidence may be influenced by the absence or presence of contrast agent in the target region. This may further enhance the generated refined subsequent result by taking into account the visibility in contrast and non-contrast images. Alternatively, the method may include receiving the previously described probability of the medical image instead of the generated classification to further enhance the weighting adjustment.

The initial result may be determined based on at least two medical images obtained at separate initial time points, preferably the initial time point, and a time point temporally prior to the initial time point.

This enables a more exact predicted subsequent result by including more medical images of the initial image set. In addition, this allows to take into account temporal dynamic movement.

The predicted subsequent result may be based on a velocity, and in particular an acceleration, of the medical instrument. The method may comprise receiving location data indicative of the position and/or the orientation of the medical instrument of the medical images by an actuator which controls the position and/or the orientation of the medical instrument. The method may comprise determining the velocity, and in particular the acceleration, of the medical instrument based on the location data, in particular by using the processing unit.

Alternatively or additionally, the predicted subsequent result may be based on a velocity, and in particular an acceleration, of an anatomical feature, in particular based on a periodic recurring movement such as a cardiac or respiratory cycle. The method may comprise detecting the recurring movement and determining the velocity, and in particular the acceleration, based on the recurring movement.

The method steps of (I) generating the predicted subsequent result and/or (II) generating the refined subsequent result may be based on a mathematical prediction algorithm. The mathematical prediction algorithm may be selected from at least one of (i) a Kalman filter, (ii) a particle filter, (iii) a recurrent neural network, (iv) a weighted sum, and (v) an optical flow algorithm. Generating the predicted subsequent result (I) and generating the refined subsequent result (II) may be based on different mathematical prediction algorithms.

The Kalman filter is particularly suitable for compensating for Gaussian noise and predicting linear transitions to provide a real-time prediction. The weighted sum may effectively include a reliability or importance of specific medical images. Another aspect of the invention relates to a computer program product comprising instructions which, when the program is executed on a computer, cause the computer to carry out the steps of the previously described method for classification of the plurality of medical images to analyse whether at least one of the plurality of medical images was captured while a body duct was under the influence of the contrast agent.

Another aspect of the invention relates to a system, in particular comprising or consisting of a data processing unit, comprising means for carrying out the steps of the previously described method for classification.

Another aspect of the invention relates to a computer-readable storage medium comprising instructions which, when executed by a computer, cause the computer to carry out the steps of the previously described computer-implemented method.

Another aspect of the invention relates to a use of the previously described computer-implemented method for classification, in particular based on the classification of each of the plurality of medical images. The method may be used for (I) planning a medical procedure, in particular a transcatheter aortic, mitral, tricuspid valve or valve component implantation or replacement. The method may be used for (II) displaying the medical images on a display in real-time including the two-dimensional representation of the aortic root and/or the two-dimensional representation of the medical instrument. The method may be used for(III) displaying a merged two- or three-dimensional representation of the aortic root with the two- or three-dimensional representation of the medical instrument. The method may be used for (IV) adjusting a dosage of a fluoroscopy imaging device for the acquisition of the medical images.

The method may be used for controlling a robotic system for (i) translationally and/or rotationally moving at least one medical instrument, in particular a pigtail catheter, a heart valve prosthesis, and/or a heart valve prosthesis delivery system, and preferably be used when crossing the native aortic annulus.

The method may be used for controlling a robotic system for (ii) positioning and/or deploying a heart valve prosthesis, in particular within the aortic annulus.

The method may be used for (iii) optimizing an amount of contrast agent to be administered and/or a time interval of administering the contrast agent into the body duct.

At least one of the previously described uses of the method may be based on the two- or three-dimensional representation of the aortic root and/or the two- or three-dimensional representation of the medical instrument.

The system comprising means for carrying out the method steps may further be configured for carrying out the previously described uses (I) - (IV) and/or surgical uses (i) - (iii) of the method.

In addition to the previously described advantages, these uses, and the system allow to reduce the clinician's workload, freeing them to focus on the treatment of the patient and increases the efficacy and safety of medical procedures, in particular surgical procedures, preferably TAVI / TAVR.

Another aspect of the invention relates to a computer-implemented method of training a machine-learning model for classification of a plurality of medical images to predict whether the medical image was captured under the influence of a contrast agent, in particular according to the previously described computer-implemented method. The method of training comprises receiving an input training dataset comprising medical training images, and contrast agent classification labels which indicate whether the respective medical training image was acquired under the influence of_a contrast agent-. The input training dataset may comprise a patient classification label which indicates different patients of the medical training images. The method of training may comprise pre-processing the medical training images by normalizing a pixel intensity of the received medical training images, preferably based on the respective patient classification label. The method of training may comprise defining at least one region of interest, in particular a plurality of regions of interest in the medical training images, in particular around a section of the medical images corresponding to a medical instrument and/or corresponding to a body duct, in particular the aorta, preferably the aortic root. The method of training may comprise partitioning the medical training images, labels, and in particular regions of interest or the plurality of regions of interests into a training subset and a validation subset. The method of training may comprise training a machine learning model on the training subset based on a loss function. The method of training may comprise validating the trained machine learning model on the validation subset. The method of training may comprise tuning the hyperparameters of the machine learning model based on a performance metric. The method of training may comprise outputting the trained, validated, and tuned machine learning model.

The input dataset may comprise time point labels indicative at which time point the medical training image was acquired. This may provide additional information on the temporal relation between the medical training images which influence the dynamic of anatomical features or medical instruments. This further allows to use a wider array of medical training images acquired using different frame rates, e.g. between 1 - 60 frames per second, in particular 15 to 30 frames per second.

Further embodiments of the invention and improvements of the described embodiments will become apparent with the following description of embodiments.

The invention is now described with reference to certain embodiments and figures which show:

Figure 1: a schematic representation of a plurality of unlabeled medical images which were processed using a computer-implemented method and labeled with a predicted binary classification indicative of whether the medical images were captured while a body duct was under the influence of a contrast agent,

Figure 2: a schematic representation of determining a probability for successively received medical images based on the computer-implemented method and a histogram of the respective probabilities over the number of the medical images / an elapsed time,

Figure 3A: a schematic three-dimensional representation of the aortic root and a schematic three-dimensional representation of a medical instrument which were merged to a three-dimensional representation,

Figure 3B: a schematic two-dimensional representation of the aortic root merged with a two-dimensional representation of a medical instrument which were included in a medical two-dimensional fluoroscopy image,

Figure 3C: a two-dimensional fluoroscopy image with two regions of interest,

Figures 3D - 3E: a schematic two-dimensional representation of the heart valve prosthesis and the aortic annulus having a marker which is indicative of a circumferential orientation of the heart valve prosthesis and a marker which is indicative of a circumferential orientation of the aortic annulus,

Figure 3F: a schematic three-dimensional representation of the heart valve prosthesis and the aortic root which indicates a tilt of the heart valve prosthesis with respect to the aortic annulus,

Figures: 4A to 4D: a first medical image on the left which was acquired under the influence of a contrast agent and a second medical image on the right which was acquired not under the influence of the contrast agent showing a medical instrument and a deployed heart valve prosthesis respectively,

Figure 5: a schematic representation of generating a predicted subsequent result based on an initial result for two medical images, determining an analyzed subsequent result based on a subsequent medical image, and combining the predicted subsequent result and the analyzed subsequent result to generate a refined subsequent result.

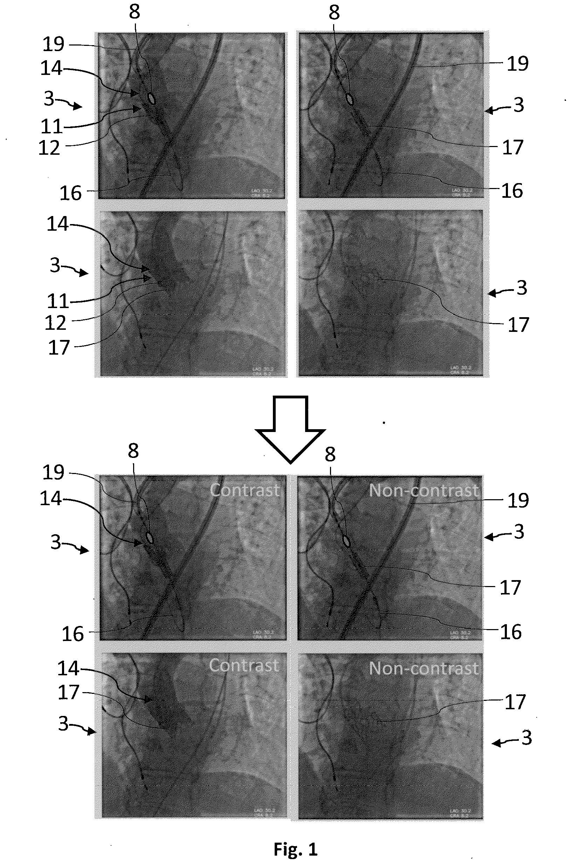

Figure 1 shows a schematic representation of a plurality of non-labeled medical images 3 (top of Fig. 1) which were processed using a computer-implemented method and labeled with a predicted binary classification indicative of whether the respective medical images 3 were captured under the influence of a contrast agent 14 (bottom of Fig. 1). The medical images 3 are fluoroscopy images which were acquired during a TAVI/TAVR procedure. However, the medical images 3 may alternatively be pre-operative or post-operative medical images 3. The label is schematically illustrated by the terms "contrast" and "non-contrast" on the processed medical images 3 in the bottom of Fig. 1. The contrast agent 14 can be identified in the medical images 3 by increased contrast in the aortic root 11 in the medical images 3 which were acquired under the influence of the contrast agent 14 and may be used for the classification.

The top rows of medical images 3 of figure 1 show a medical instrument of a TAVI/TAVR system which comprises a delivery device 19, a pigtail catheter 16, and a heart valve prosthesis 17 which was advanced by femoral catheterization to the aortic root 11. The contrast agent 14 is preferably administered directly from a pigtail catheter 16 which was advanced through the aortic root 11. The delivery device 19 comprises a sensor 8 for measuring the concentration of the contrast agent directly in the aortic root 11 such that determining the probability may be enhanced by the measured concentration of the contrast agent.

The bottom rows of figure 1 show a medical instrument of the TAVI/TAVR system which comprises a heart valve prosthesis 17 which was deployed in the aortic annulus 12.

The medical images 3 on the left were acquired under the influence of the contrast agent 14 within the aortic root 11. They enable enhanced visualization of the aortic root'11 and in particular the aortic annulus 12. Anatomic landmarks can thus be visualized in the medical images 3 using the contrast agent 14.

The medical images 3 on the right were acquired not under the influence of the contrast agent 14. They enable enhanced visualization of the medical instruments such as the pigtail catheter 16, the heart valve prosthesis 17, and the delivery device 19 which are more radiopaque. Some anatomical landmarks such as calcifications are also more clearly visible in the medical images not acquired under the influence of the contrast agent 14 (not shown in Fig. 1).

The classification of "contrast" and "non-contrast" based on the computer-implemented method shown in Fig. 1 can, therefore, provide information on which anatomic landmarks, in particular the aortic root and components thereof or the medical instrument or components thereof, are visible or more clearly visible. This allows to make a decision on which medical images 3 may be used for further processing. Further processing may e.g. relate to a registration of the anatomic landmark(s) to a pre-operative computer tomography, creating a two- or three-dimensional representation of the anatomic landmark(s) and/or medical instrument(s), visually displaying the anatomic landmark(s) and/or the medical instrument(s), and/or robotic control. A concentration measurement of contrast agent 14 by the sensor 8 may be used to render the classification of the medical images 3 more accurate.

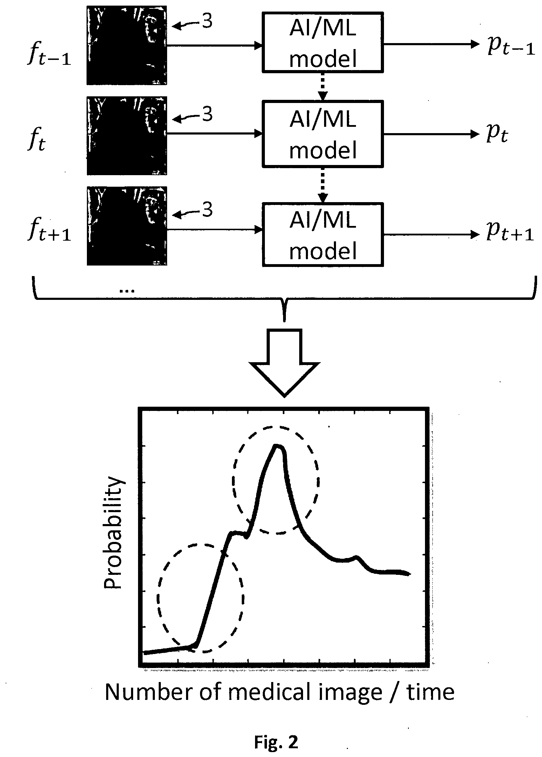

Figure 2 shows a schematic representation of determining a probability $p_{t-1}$, $p_t$, $p_{t+1}$, ... for each successively received medical image 3 based on the computer-implemented method and a histogram of the respective probabilities over the number of the medical images 3 / an elapsed time. The probabilities $p_{t-1}$, $p_t$, $p_{t+1}$, ... of each medical image 3 are indicative of whether the medical image 3 was acquired under the influence of a contrast agent. The probabilities are determined independently from each other based on a machine learning classification model on a memory unit. The machine learning algorithm was accordingly trained with contrast images and non-contrast images which were labelled accordingly, such that the machine learning algorithm is e.g. susceptible to subtle contrast changes of the images indicating a presence or absence of the contrast agent.

The histogram is an exemplary algorithm for linking the successive medical images 3 to the time of acquisition of the medical images 3 to calculate a threshold-based classification value. Since the increase in the concentration of the contrast agent in the body duct, e.g. aortic root, may be described by a quasi-steady, often monotonically increasing function, a temporal analysis,such as using the histogram data, can significantly improve the classification. A time point when a specific threshold of contrast agent concentration or contrast enhancement of the medical images 3 is exceeded can be determined. This may define an outcome of the classification, in particular a binary classification.

Based on the histogram or another time-based algorithm, a time-based probability of the medical images 3 is determined in real-time. The classification whether the medical image 3 was acquired under the influence of the contrast agent can thus be determined based on the time-based probability of the medical images 3:

The lower dashed ellipse of Fig. 2 shows a low probability increasing monotonically over time. These medical images 3 in Fig. 2 may exemplary be classified as not acquired under the influence of the contrast agent, since the contrast agent concentration / contrast enhancement in the medial images 3 may not yet be sufficient to identify the anatomic features.

The upper dashed ellipse of Fig. 2 shows a peak of the probabilities of the medical images 3 which are classified as acquired under the influence of the contrast agent. Outliers, images subject of X-ray.dosage adjustment, or images acquired while / after adjusting a position / an orientation of imaging device for the acquisition of the medical images 3, e.g. a C-arm, may still be classified correctly, by considering the time-based probability.

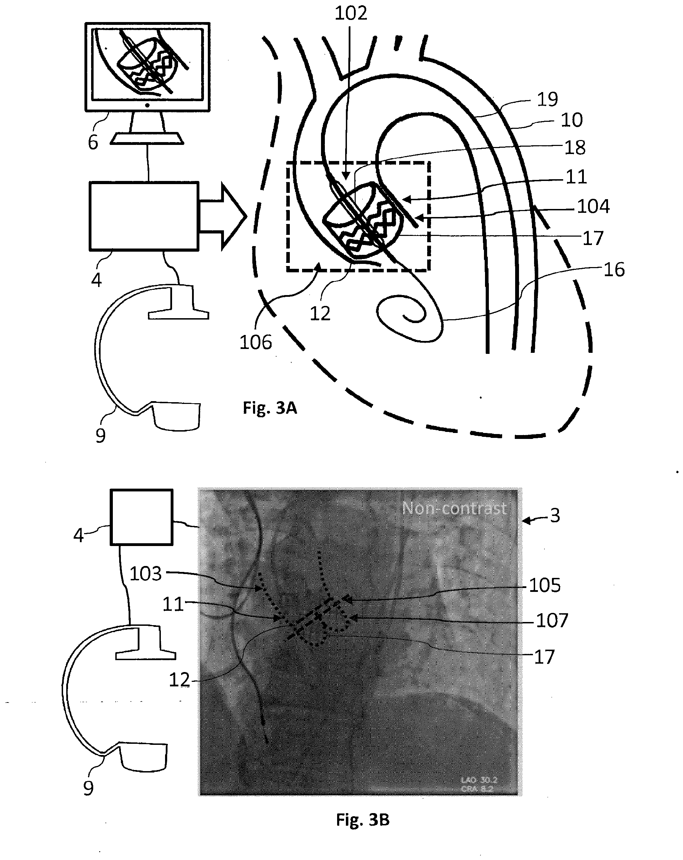

Figure 3A shows a schematic three-dimensional representation 104 of the aortic root 11 and a schematic three-dimensional representation 102 of a medical instrument which were merged to a merged three-dimensional representation 106. The medical instrument in Fig. 3A is formed by a heart valve prosthesis 17, a pigtail catheter 16, a balloon catheter 18, and/or a delivery device 19. The medical images for reconstructing the merged three-dimensional representation 106 were acquired by a fluoroscopy imaging device 9 formed by a C-arm which is connected to a processing unit 4 for carrying out the computer-implemented method.

The three-dimensional representation 104 of the aortic root 11 (only shown in two-dimensions in the image for better visibility) and the aorta 10 was carried out by the processing unit 4 based on the contrast images. The three-dimensional representation 104 of the aortic root 11 may further be refined by carrying out a registration of the medical images and a pre-operative three-dimensional computer tomography model of the aortic root 11. This enhances image quality by providing three-dimensional clinical data of the patient instead of relying merely on two-dimensional fluoroscopy data for the three-dimensional representation 104.

The three-dimensional representation 102 of the medical instrument 17, 18, 19 was generated by the processing unit 4 based on the non-contrast images. The three-dimensional representation 102 of the medical instrument may further be refined by registration of the medical images and a virtual model of the medical instrument, including known dimensions of the medical instrument. The clinician or a robotic controller may for example input the information about the medical instrument for the registration which is used into the processing unit such that the dimensions of the medical instrument are known based on the virtual model corresponding to the selected instrument.

The medical instrument is radiopaque or may be formed by an inflatable balloon catheter 18 which can be inflated by a radiopaque inflation medium such that the medical instrument is clearly visible without any contrast agent.

Merging the three-dimensional representations 104, 102 of the aortic root 11 and the medical instrument via the processing unit 4 enables determining a spatial relationship, e.g. the relative position and/or orientation, of the aortic root 11 and the medical instrument or elements thereof. This enhances an efficiency to perform surgical procedures and leads to superior clinical outcomes. Moreover, reducing the cognitive load on the clinician leads to better average clinical performance. In addition, this allows to mitigate the respective adverse effects on visibility of anatomical feature and medical instruments in medical images acquired under the influence and not under the influence of contrast agent by including the relevant information in the merged model simultaneously.

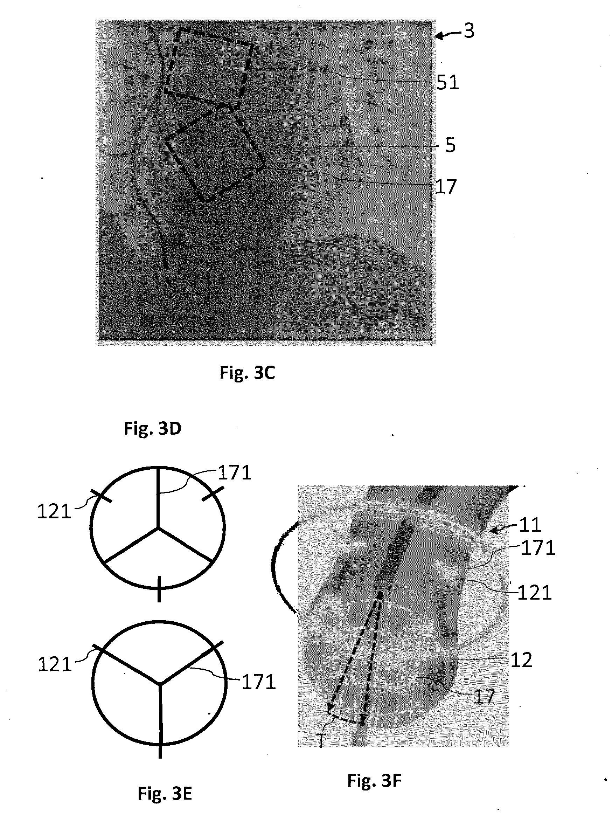

Figure 3A further shows that the merged three-dimensional representation 106 may be visually displayed on a display 6 connected to the processing unit 4 such that a clinician can easily assess the ideal placement and or positioning of the medical instrument with respect to an aortic annulus 12. The merged three-dimensional representation 106 may further be used for fully automated placement of the heart valve prosthesis 17, e.g. via a robotic controller. Additionally or alternatively, the merged three-dimensional representation 106 may be configured for supporting the placement of the heart valve prosthesis 17 by a clinician by providing visual, tactile, or auditive indicators, e.g. a colour coding scheme, displaying an arrow, a vibration scheme, or a sound scheme, which are indicative of the correct placement of the heart valve prosthesis 17 or a delivery device thereof (see Figs. 3C - 3F).

Figure 3B shows a schematic two-dimensional representation 103 of the aortic root 11 merged with a two-dimensional representation 105 of a medical instrument which were included in a medical two-dimensional fluoroscopy image 3. The two-dimensional representation 103 of the aortic root 11 is shown as a dashed line in a two-cusp view. The two-dimensional representation 103 of the aortic root 11 was determined based on prior medical images 3 which were classified as detected under the influence of a contrast agent.

Figure 3B shows a processing unit 4 which is connected to an imaging device 9, e.g. a C-arm for an acquisition of the medical fluoroscopy images 3. The processing unit 4 is further configured for merging the two-dimensional representations of the aortic root 11 and the medical instrument and including the merged representation in the medical image 3 in real-time. The two-dimensional fluoroscopy image 3 was acquired not under the influence of a contrast agent and may be displayed together with a merged two-dimensional representation 107 of the aortic root 11 and the medical instrument on a display 6 (see Fig. 3A) in real-time.

The medical instrument in Fig. 3B includes a heart valve prosthesis 17 which is included in the two-dimensional representation 105 of the medical instrument as a dashed line indicative of a position and/or orientation of the heart valve prosthesis. The two-dimensional representation of the aortic root 11 includes a dashed line which is indicative of an ideal target position and/or orientation for placement of the heart valve prosthesis 17 in the aortic annulus 12 which was retrieved based on the medical images 3 acquired under the influence of the contrast agent. This allows a clinician or a fully autonomous robotic system to control the placement / deployment of the heart valve prosthesis 17 at the target position / orientation. This positioning / deployment may be supported by providing visual or auditive indicators as previously described, in particular different visual indicators than dashed lines. In addition, the two-dimensional representation may include specific landmarks used by clinicians such as the "3 mm line" used as a reference of the depth below the aortic annulus for more reliable placement.

Figure 3C shows a two-dimensional fluoroscopy image 3 with two regions of interest 5, 51 highlighted by a dashed rectangle respectively. The first region of interest 5 is arranged around a distal tip of a medical instrument formed by a heart valve prosthesis 17 at a position corresponding to a position / an orientation of the aortic root in the medical image 3. The second region of interest 51 is arranged proximally to the first region of interest 5 and corresponds to a position / an orientation of the aortic arch. The region of interest 5, 51 may be chosen such that the classification by the computer-implemented method is particularly reliable in the region of the distal tip of the medical instrument. This allows a more exact classification whether the medical images 3 / regions of interest 5, 51 were acquired under the influence of a contrast agent in the proximity of the distal tip or a target position / a target orientation. Hence, navigation during TAVI/TAVR, e.g. through the aortic arch, may be facilitated and a more precise position for placement / deployment of the heart valve prosthesis 17, e.g. within the aortic annulus, can be achieved.

An intensity value for each region of interest 5, 51 may be determined and used for determining a probability that a respective medical image was acquired under the influence of the contrast agent. Alternatively, the classification method may only be used on the region of interest 5, 51 to determine the probability and, thereby, optimize a resulting classification result for the specific region of interest 5, 51. The method may also be based on a plurality of regions of interest 5, 51 which are arranged spaced apart from each other as shown in Fig. 3C or regions of interest which are arranged in a chess-board pattern, such that a successive change in contrast /intensity values can be monitored over an elapsed time to determine the probability of each medical image 3. Using at least one region of interest 5, 51 may enable the computer-implemented method to disregard regions of the medical images 3 which are not influenced by the contrast agent or are not relevant for a medical/surgical procedure / a step of the medical/surgical procedure, in particular when performing TAVI/TAVR. The region of interest or regions of interest 5, 51 may be used in the previously described method steps of Figs. 1 - 3B.

Figures 3D and 3E show a schematic two-dimensional representation of a heart valve prosthesis and the aortic annulus having a marking 171 which is indicative of a circumferential orientation of the heart valve prosthesis 17 and a marking 121 which is indicative of a circumferential orientation of the aortic annulus.

The circumferential orientation of the heart valve prosthesis may be determined by a non-rotationally symmetric radiopaque design of the medical instrument, in particular via radiopaque markings or a design of the heart valve prosthesis.

The circumferential orientation of the aortic annulus may be determined based on the cusps of the native aortic valve annulus.

The markings 171 indicative of the circumferential orientation of the heart valve prosthesis 17 were determined based on the non-contrast images with the previously described method. The markings 121 indicative of a circumferential orientation of the aortic annulus were determined based on the contrast images with the previously described method.

The orientation of these markings 171, 121 with respect to each other may allow for simplified circumferential alignment of the heart valve prosthesis with respect to the aortic annulus, in particular in respect to the cusps of the aortic valve, by a clinician or a robotic controller. The method may include the step of calculating these markings 171, 121 via a processing unit as previously described and displaying these visual indicators in the form of markings 171, 121 on a display.

As shown in Fig. 3D, the markers 171, 121 are not aligned while Fig. 3E shows that the markings 171, 121 are essentially perfectly aligned which indicates a target orientation / a target position of the heart valve prosthesis. These visual indicators may facilitate a deployment of the heart valve prosthesis in the aortic annulus.

Figure 3F shows a schematic three-dimensional representation of the heart valve prosthesis 17 and the aortic root 12 which indicates a tilt of the heart valve prosthesis 17 with respect to the aortic annulus 12. In addition, to the previously described markings 171, 121 of the heart valve prosthesis 17 which indicate the circumferential orientation of the heart valve prosthesis 17 with respect to the aortic annulus 12, the three-dimensional representation includes a colour coding scheme. The colour coding scheme indicates a tilt T of the heart valve prosthesis 17 in a current medical image with respect to a target position in the aortic annulus 12. The colour coding scheme or arrows can further indicate a longitudinal position of the heart valve prosthesis 17 with respect to the aortic annulus 12. This allows a reliable placement of the aortic valve prosthesis within the aortic annulus and renders TAVI/TAVR procedures less demanding for clinicians without necessitating an intensive learning process. Proper placement may further improve hemodynamic, prevent paravalvular leakage, valve migration, or embolization, maximize a lifespan of the implant, and optimize the overall patient outcomes.

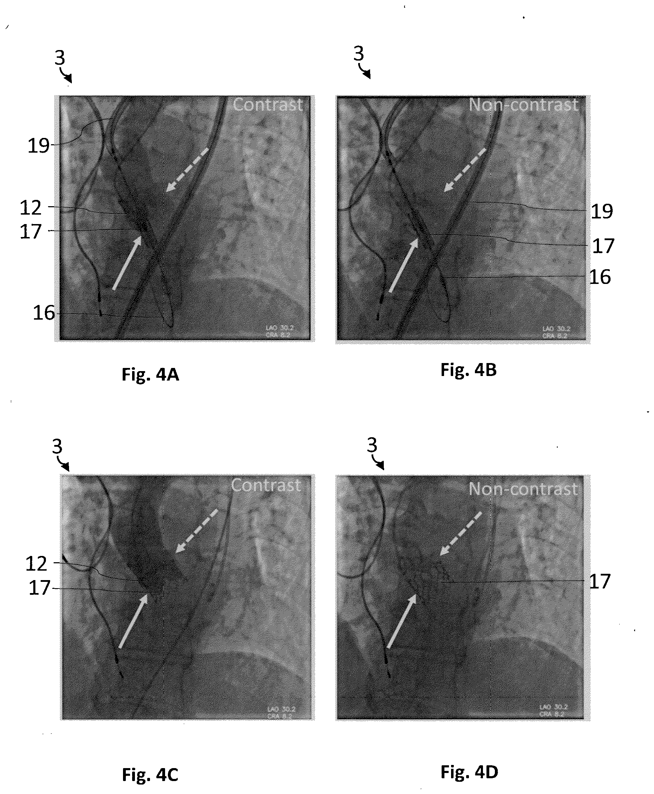

Figures 4A to 4D show a first medical image 3 which was acquired under the influence of a contrast agent and a second medical image 3 which was acquired not under the influence of the contrast agent indicated by labels "contrast" and "non-contrast" showing a medical instrument and a deployed heart valve prosthesis respectively. The medical instrument in Figs. 4A and 4B includes a collapsed heart valve prosthesis 17, a delivery device 19, and a pigtail catheter 16 which was advanced into the ventricle of a heart for facilitating deployment of the heart valve prosthesis 17. The deployed heart valve prosthesis 17 in Figs. 4C and 4D is deployed in the aortic annulus 12 after successfully performing a TAVI/TAVR procedure while the rest of the medical instrument was removed.

In Figs. 4A and 4C the aortic annulus 12 is visible when the body duct in the medical image 3 was under the influence of a contrast agent (see dashed arrow). In figures 4B and 4D the aortic annulus 12 is not visible anymore since the body duct in the medial image 3 was not under the influence of a contrast agent (see dashed arrow).

However, the radiopaque components of the medical instrument 16, 17, 19, in particular the deployed heart valve 17, are not visible in Figs. 4A or 4C but instead visible in Figs. 4B and 4D.

The medical instrument 16, 17, 19 and/or the anatomical feature, such as the aortic annulus 12, undergo perpetual motion, due to manipulation by a clinician or a robot of the medical instrument, or due to the cardiac cycle, due to the respiratory cycle, or due to mutual interactions between the medical instrument 16, 17, 19 and the anatomical feature(s). A position and/or an orientation of the medical instrument 16, 17, 19 and/or the anatomical feature may hence constantly change. Consequently, it would be advantageous to track the dynamic behaviour of the medical instrument 16, 17, 19 and/or the anatomical feature, in particular between medical image sets which were at least partially acquired under the influence of the contrast agent and not under the influence of the contrast agent.

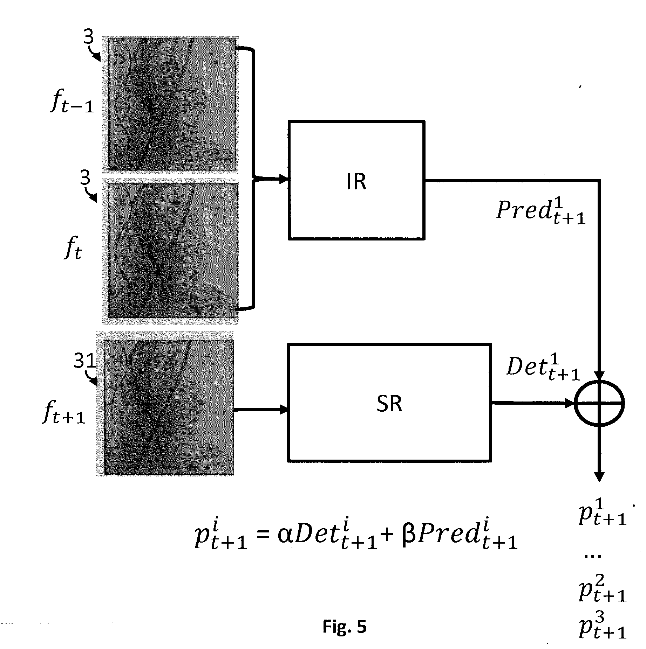

Figure 5 shows a schematic representation of generating a predicted subsequent result $Pred_{t+1}^{1}$ at a time t + 1 based on an initial result IR which was determined based on an initial image set comprising two medical images 3 denoted by $f_{t-1}$, $f_t$ acquired at times t - 1, t. Figure 5 further shows determining an analysed subsequent result $SR = Det_{t+1}^{1}$ based on a subsequent medical image 31 denoted by $f_{t+1}$. and combining the predicted subsequent result $Pred_{t+1}^{1}$ and the analysed subsequent result $Det_{t+1}^{1}$ to generate a refined subsequent result $p_{t+1}^{1} = \alpha Det_{t+1}^{1} + \beta Pred_{t+1}^{1}$. In this manner, the refined subsequent result may be continuously determined for successive medical images based on the following relationship $p_{t+1}^{i} = \alpha Det_{t+1}^{i} + \beta Pred_{t+1}^{i}$. The results refer to the position and/or the orientation of an anatomical feature and/or of a medical instrument or components thereof. The anatomical feature may e.g. be an aortic annulus, a left ventricle, an aortic valve, a calcification, an aortic root, an Aortic arc, a coronary ostia, or a mitral valve.

In Fig. 5, generating a predicted subsequent result $Pred_{t+1}^{1}$ is carried out by using a recurrent neural network, and combining the predicted subsequent result and the analysed subsequent result $Det_{t+1}^{1}$ is carried out using a weighted sum which is supported by a machine learning algorithm. The parameters $\alpha$ and $\beta$ represent weighting parameters which are adjusted based on a machine learning model to account for the visibility of the medical instrument or anatomical features such as the aortic root and in particular the aortic annulus in the medical images 3, 31.

The predicted subsequent result $Pred_{t+1}^{1}$ is preferably based on multiple medical images 3, in particular at least two medical images 3, as shown in Fig. 5 which allows to take the dynamic behaviour such as a velocity and/or acceleration of the tracked feature into consideration. This allows to generate a more reliable predicted subsequent result of the-future position and/or orientation of the tracked feature.

The weighting of the parameters $\alpha$ and $\beta$ may

further be refined based on a received classification, in particular binary classification, or probability of the medical images 3, 31 as previously described. This classification or probability is indicative of the visibility of the tracked feature, e.g. medical instrument and/or anatomical feature, in the medical images 3, 31 due to the contrast agent. The classification or probability may be indicative as to whether the predicted subsequent result $Pred_{t+1}^1$ or the analysed subsequent result $Det_{t+1}^1$ is more reliable for determining the refined subsequent result which indicates the position and/or the orientation of the medical instrument or the anatomical feature. This is particular advantageous if the position and/or orientation of the medical instrument or the anatomical feature cannot be determined in the analysed subsequent result $Det_{t+1}^1$.

The refined subsequent result $p_{t+1}^1$ may be displayed or transmitted to allow a clinician or robotic controller to receive a more reliable position and/or an orientation of the medical instrument or the anatomical feature. The position and/or the orientation may be determined and displayed / transmitted in real-time. In a preferred embodiment, the position and/or the orientation is/are directly included in the fluoroscopy medical images or in a two-or three-dimensional representation of the medical instrument and/or the anatomical feature when being visually displayed.

**Claims**

1. A computer-implemented method for classification of a medical image (3) to analyse whether at least one of a plurality of medical images (3) was captured while a body duct (10), preferably a cardiac component or a vessel component, in particular the aortic root (11), the aortic, mitral, and/or tricuspid valve, was under the influence of a contrast agent (14), the method comprising the steps:

   - successively receiving at least one or a plurality of medical images (3), preferably in real-time for several medical images (3), using an input interface,
   - processing the at least one medical image (3) using a processing unit (4) operatively connected to the input interface, thereby
   - determining a probability that the medical image (3) was captured while under the influence of the contrast agent (14) based on the medical image (3) and a classification model stored on a memory unit,
   - using the processing unit (4) for generating a classification of the medical image (3) whether the medical image was captured under the influence of the contrast agent (14) based on the probability,
   - transmitting the classification to an output interface, preferably in real-time.

2. The computer-implemented method according to claim 1,
   wherein the plurality of medical images (3) are two-dimensional or three-dimensional medical images, in particular fluoroscopic images.

3. The computer-implemented method according to one of the preceding claims, wherein the method comprises the step of:

   - determining the probability of a newly received medical image (3) based on the probability of at least one previously received medical image (3).

4. The computer-implemented method according to claim 3,
   wherein the method comprises the step of:

   - applying a first algorithm, in particular a machine learning algorithm, to take into account the time between the acquisition of the newly received medical image (3) and the previously received medical image (3) to determine the probability.

5. The computer-implemented method according to one of the preceding claims, wherein the method comprises the steps of:

   - Applying a second algorithm, in particular a machine learning algorithm, to the non-contrast medical images and/or those medical images (3) which were classified as acquired under the influence of the contrast agent, and in particular a time between the acquisition, and generate a predicted probability of whether a future image is a contrast or non-contrast image,
   - predicting the classification of at least one future medical image (3) based on the predicted probability.

6. The computer-implemented method according to one of the preceding claims, wherein the method comprises the step of:

   - determining a spatial orientation and/or a position of the body duct (10), in particular the aortic root (11), in the medical images (3) based only on the plurality of medical images (3) which were classified as captured under the influence of the contrast agent (14) and/or

- reconstructing a two- or three-dimensional representation (103, 102) of the body duct (10) based only on image registration of the plurality of medical images (3) which were classified as captured under the influence of the contrast agent (14), and in particular based on a three-dimensional model of the body duct (10), preferably a pre-operative three-dimensional computer tomography model, and
- preferably visually displaying the medical images (3) including the two-dimensional representation (103) of the body duct (10) in the medical images (3) which were not classified as captured under the influence of the contrast agent in real-time.

7. The computer-implemented method according to one of the preceding claims, wherein the method comprises the step of:

    - determining a spatial orientation and/or position of a medical instrument (16, 17, 18), and in particular a two- or three-dimensional representation (105, 104) of the medical instrument (16, 17, 18), in the medical images (3) based on the plurality of medical images (3) which were classified as captured not under the influence of the contrast agent, and in particular based on a known predefined shape of the medical instrument (16, 17, 18), and
    - preferably visually displaying medical images (3) the two-dimensional representation (103) of the medical instrument (16, 17, 18) in the medical images (3) which were classified as captured under the influence of the contrast agent in real-time.

8. The computer-implemented method according to claims 6 and 7, wherein the method comprises the step of:

    - Merging the reconstructed two- or three-dimensional representation (103, 102) of the body duct (10), in particular the aortic root (11), with the two- or three-dimensional representation (105, 104) of the medical instrument (16, 17, 18), wherein the merged two-or three-dimensional representation (107, 106) shows a spatial relationship between the body duct (10), in particular the aortic root (11), and the medical instrument (16, 17, 18).

9. The computer-implemented method according to one of the preceding claims, wherein the method comprises the steps of:

    - measuring a concentration of the contrast agent within the body duct (10), in particular the aortic root (11), using an intracorporeally arranged sensor (8), in particular attached to a medical instrument (16, 17, 18),
- using the processing unit (4) for generating the classification of the plurality of medical images (3) supported by the measured concentration of the contrast agent.

10. The computer-implemented method according to one of the preceding claims, wherein the method comprises the step of:

    - pre-processing the medical images (3) using the processing unit (4) by defining at least one region of interest (5, 51) corresponding to a subregion of the medical images (3), wherein
    - the at least one region of interest (5, 51) is arranged around a section of the medical images (3) corresponding to a medical instrument (16, 17, 18) and/or corresponding to an anatomical section, in particular the aorta, preferably the aortic root (11), and/or
    - a plurality of regions of interest (5, 51) are arranged spaced apart from each other, in particular in a chess-board pattern,
    - determining the probability of each medical image (3) using the processing unit (4) based on the at least one region of interest (5, 51) of the medical image (3), in particular by taking into account a plurality of regions of interests (5, 51) of the medical image (3).

11. The computer-implemented method according to one of the preceding claims, wherein the method comprises the steps of:

    - Receiving at least one first medical image (3) which includes a first anatomical feature or a medical instrument and
    - Receiving at least one second medical image (3) which includes a different second anatomical feature or a - medical instrument, wherein the first and second medical images were acquired simultaneously or sequentially,
    - processing the first and second medical image (3) using the processing unit (4), thereby
    - Determining the probabilities that the first and the second medical image (3) was acquired while under the influence of the contrast agent (14), respectively, based on the second and first medical image (3) and the classification model,
    - Using the processing unit (4) for generating a first and second classification of the first and second medical image (3) whether the medical images (3) were captured under the influence of the contrast agent (14) based on the probabilities,
    - Transmitting the first and second classification to the output interface, preferably in real-time.

12. A computer-implemented method, in particular according to one of the preceding claims, wherein the method comprises the steps of:

    - successively receiving a plurality of medical images (3) in real-time, using an input interface,
    - analysing an initial image set comprising at least one of the medical images (3) taken at an initial time point using a processing unit (4) connected to the input interface thereby generating an initial result,
    - predicting a subsequent result for at least one subsequent image set taken at a subsequent time point based on the initial result, thereby generating a predicted subsequent result,
    - analysing a subsequent image set comprising at least one medical image received at the subsequent time point, thereby generating an analysed subsequent result,
    - generating a refined subsequent result based on the predicted subsequent result and the analysed subsequent result.

13. The computer-implemented method according to claim 12,
    wherein the step of

    - Determining the initial result at an initial time point is based on the initial image set comprising at least two received medical images (3) obtained at separate time points, preferably the initial time point, and a time point temporally prior to the initial time point.

14. The computer-implemented method according to one of the claims 12 or 13, wherein the step of:

    - generating the predicted subsequent result and/or
    - generating the refined subsequent result
    is based on a mathematical prediction algorithm, in particular at least one of (i) a Kalman filter, (ii) a particle filter, (iii) a recurrent neural network, (iv) a weighted sum and (v) an optical flow algorithm, preferably on different mathematical prediction algorithms.

15. Computer program product comprising instructions which, when the program is executed by a computer, cause the computer to carry out the steps of the method of one of the claims 1 - 14.

16. A system, in particular comprising or consisting of a data processing unit, comprising means for carrying out the steps of the method of one of the claims 1 - 14.

17. A computer-readable storage medium comprising instructions which, when executed by a computer, cause the computer to carry out the steps of the method of one of the claims 1 - 14.

18. Use of the computer-implemented method of one of the claims 1 - 14 for at least one of:

    - planning a medical procedure, in particular a transcatheter aortic, mitral, tricuspid valve or valve component implantation or replacement,
    - selecting and/or customizing at least one medical instrument (16, 17, 18),
    - displaying the medical images (3) on a display (6) in real-time including the two-dimensional representation (103) of the aortic root (11) and/or the two-dimensional representation (105) of the medical instrument (16, 17, 18),
    - displaying the merged two- or three-dimensional representation (103, 102) of the aortic root (11) with the two- or three-dimensional representation (105, 104) of the medical instrument (16, 17, 18), and
    - adjusting a dosage of a fluoroscopy imaging device for the acquisition of the medical images (3).

19. A computer-implemented method of training a machine-learning model for classification of a plurality of medical images (3) to predict whether the medical image (3) was captured while a body duct, in particular the aortic root (11), a mitral, a tricuspid valve, or a valve component, was under the influence of a contrast agent, in particular according to the computer-implemented method of one of the claims 1 - 13, comprising:

    - receiving an input training dataset comprising medical training images, and contrast agent classification labels which indicate whether the medical training image was acquired under the influence of a contrast agent (14), and in particular a patient classification label which indicates different patients of the medical training images,
    - optionally pre-processingthe medical training images by normalizing a pixel intensity of the received medical training images, preferably based on the patient classification label,
    - preferably defining at least one region of interest (5, 51), in particular a plurality of regions of interest in the medical training images, in particular around a section of the medical training images corresponding to a medical instrument (16, 17, 18) and/or corresponding to a body duct (10), in particular the aorta, preferably the aortic root (11),
    - partitioning the medical training images, labels, and in particular regions of interests or the plurality of regions of interest, into a training subset and a validation subset,

- training a machine learning model on the training subset based on a loss function, and
- validating the trained machine learning model on the validation subset,
- tuning the hyperparameters of the machine learning model based on a performance metric, and
- outputting the trained, validated, and tuned machine learning model.

**Fig. 1**

Fig. 2

**Fig. 3A**

**Fig. 3B**

Fig. 3C

Fig. 3D

Fig. 3E

Fig. 3F

**Fig. 4A**

**Fig. 4B**

**Fig. 4C**

**Fig. 4D**

$$p_{t+1}^i = \alpha Det_{t+1}^i + \beta Pred_{t+1}^i$$

**Fig. 5**

Europäisches
Patentamt

European
Patent Office

Office européen
des brevets

# EUROPEAN SEARCH REPORT

**Application Number**

EP 23 31 5383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TERRENCE CHEN ET AL: "Robust and Fast Contrast Inflow Detection for 2D X-ray Fluoroscopy", 18 September 2011 (2011-09-18), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 243 - 250, XP019165584, ISBN: 978-3-540-74549-5 * abstract; figure 1 * * sec. 2.2 * | 1-19 | INV. G06V10/764 |

-----

TECHNICAL FIELDS
SEARCHED     (IPC)

G06V

The present search report has been drawn up for all claims

| Place of search | Date of completion of the search | Examiner |
|---|---|---|
| The Hague | 7 March 2024 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 538 990 A1**

**Patent documents cited in the description**

• EP 3719744 A1